# EUROPÄISCHE PATENTSCHRIFT

(11) **EP 1 963 145 B1**
(45) Veröffentlichungstag und Bekanntmachung des Hinweises auf die Patenterteilung: **15.04.2009**
(21) Anmeldenummer: 06829907.2
(22) Anmeldetag: 22.12.2006
(51) Int. Cl.: B60R 21/207, B60R 21/00

(54) **INSASSENRÜCKHALTEEINRICHTUNG FÜR EIN KRAFTFAHRZEUG**
OCCUPANT RESTRAINT DEVICE FOR A MOTOR VEHICLE
DISPOSITIF DE RETENUE DES OCCUPANTS POUR VÉHICULE AUTOMOBILE

(30) Priorität: 23.12.2005 DE 102005062849
(43) Veröffentlichungstag der Anmeldung: 03.09.2008
(73) Patentinhaber: Takata-Petri AG, 63743 Aschaffenburg (DE)
(72) Erfinder: BREUNINGER, Martin, 89233 Neu-Ulm (DE); KLIMA, Josef, 60300 Brno (CZ)
(74) Vertreter: Baumgärtel, Gunnar
(86) Internationale Anmeldenummer: PCT/EP2006/012647
(87) Internationale Veröffentlichungsnummer: WO 2007/073944

(56) Entgegenhaltungen:
- DE-A1- 10 056 961
- FR-A1- 2 830 814
- GB-A- 2 410 011
- US-A- 5 944 341

## Beschreibung

Die Erfindung betrifft eine Insassenrückhalteeinrichtung für ein Kraftfahrzeug nach dem Oberbegriff des Anspruchs 1, wie aus US 5 944 341 bekannt ist.

Eine derartige Insassenrückhalteeinrichtung weist eine Tragstruktur eines Kraftfahrzeuges auf, die, bezogen auf einen in ein Kraftfahrzeug eingebauten Zustand, eine einem Außenraum des Kraftfahrzeuges zugewandte Außenseite und eine einem Innenraum des Kraftfahrzeuges zugewandte Innenseite aufweist, sowie einen Kraftfahrzeugsitz, mit einer der Innenseite der Tragstruktur zugewandten Außenseite, einen Gassack, der zum Schutz eines Insassen vor einer vom Außenraum her auf die Außenseite der Tragstruktur erfolgenden Krafteinwirkung entfaltbar ist, eine Aufnahme für den Gassackes, die am Kraftfahrzeugsitz gelagert ist, und einem öffenbaren Bereich der Aufnahme, durch den hindurch der Gassack in den Innenraum des Kraftfahrzeuges entfaltbar ist.

Der Erfindung liegt das Problem zugrunde, eine Insassenrückhalteeinrichtung der eingangs genannten Art mit einer verbesserten Entfaltung des Gassackes bereitzustellen.

Dieses Problem wird gelöst durch eine Insassenrückhalteeinrichtung mit den Merkmalen des Anspruchs 1.

Danach ist eine Pre-Crash-Detektionsvorrichtung vorgesehen, die dazu eingerichtet und vorgesehen ist, eine bevorstehende, vom Außenraum her auf die Außenseite der Tragstruktur erfolgende Krafteinwirkung zu erkennen, wobei die Pre-Crash-Detektionsvorrichtung beim Erkennen einer bevorstehenden Krafteinwirkung eine Bewegung der Aufnahme des Gassackes aus einer Ruheposition in eine Betriebsposition auslöst, die entlang einer von der Außenseite des Kraftfahrzeugsitzes zur Innenseite der Tragstruktur gerichteten Bewegungsrichtung erfolgt.

Durch das Ausstellen der Aufnahme ist eine Verbindung (Kopplung) zwischen der Tragstruktur und Kraftfahrzeugsitz (Sitzlehne) möglich, die einer Verdämmung des Gassack-Entfaltungsraums beim Eintreten einer Intrusion der Tragstruktur während eines Seitencrashs entgegenwirkt, so dass sich der Gassack besser in den Innenraum des Kraftfahrzeuges entfalten kann.

Zur Verbesserung der Positioniersicherheit des Gassackes ist des Weiteren vorgesehen, dass der öffenbare Bereich durch die Bewegung der Aufnahme des Gassackes aus der Ruheposition in die Betriebsposition zwischen der Innenseite der Tragstruktur und der Außenseite des Kraftfahrzeugsitzes angeordnet wird, so dass sich der Gassack zwischen der Innenseite der Tragstruktur und der Außenseite des Kraftfahrzeugsitzes frei in Geradeausfahrtrichtung entfalten kann.

Zur ggf. reversiblen Bewegung der Aufnahme des Gassackes bzw. eines vollständigen in der Aufnahme angeordneten Gassackmoduls, ist eine mit der Pre-Crash-Detektionsvorrichtung gekoppelte Bewegungserzeugungsvorrichtung vorgesehen, die dazu ausgebildet ist, die Aufnahme aus der Ruheposition in die Betriebsposition zu verschieben, wenn die Pre-Crash-Detektionsvorrichtung eine bevorstehende Krafteinwirkung - z. B. einen Seitencrash mit einem anderen Fahrzeug - vorhersieht.

Mit Vorteil ist die Pre-Crash-Detektionsvorrichtung dazu eingerichtet und vorgesehen, beim Erkennen einer bevorstehenden, vom Außenraum her auf die die Außenseite der Tragstruktur (seitliche Karosserie) erfolgende Krafteinwirkung ein erstes Ausgangssignal zu erzeugen, das die Bewegungserzeugungsvorrichtung auslöst.

Weiterhin ist ein Gasgenerator zum Aufblasen des Gassackes vorgesehen, der zum Aufblasen des Gassackes benötigtes Gas erzeugt bzw. freisetzt, wenn sich die Aufnahme in ihrer Betriebsposition befindet.

Bevorzugt ist die Pre-Crash-Detektionsvorrichtung dazu eingerichtet und vorgesehen, beim Erfassen einer bevorstehenden, vom Außenraum her auf die Tragstruktur gerichteten Krafteinwirkung ein zweites Ausgangssignal zu generieren, das den Gasgenerator zum Aufblasen des Gassackes aktiviert, sofern sich die Aufnahme in der Betriebsposition befindet.

Alternativ hierzu ist zum Aktivieren des Gasgenerators ein Crashsensor vorgesehen, der den Gassack aktiviert, wenn eine tatsächliche Krafteinwirkung auf die Außenseite der Tragstruktur durch den Crashsensor erfasst wird. Der Gassack wird dabei vorzugsweise erst dann aktiviert, wenn der öffenbare Bereich außerhalb des Kraftfahrzeugsitzes angeordnet ist.

In einer Variante der Erfindung ist vorgesehen, das die Aufnahme in ihrer Betriebsposition zum mechanischen Ankoppeln an die Tragstruktur gegen die Innenseite der Tragstruktur drückt, um bei einer auf die Außenseite der Tragstruktur einwirkenden Krafteinwirkung einer Deformation der Tragstruktur entgegen der Bewegungsrichtung entgegenzuwirken und eine Verdämmung des Absorptionsweges zwischen der Tragstruktur und dem Fahrzeugsitz zu verringern.

In einem Ausführungsbeispiel der Erfindung ist vorgesehen, dass die Aufnahme durch die Bewegungserzeugungsvorrichtung nur soweit entlang der Bewegungsrichtung verlagert wird, dass die Aufnahme die Innenseite der Tragstruktur in der Betriebsposition gerade berührt, um sich an dieser abzustützen zu können.

In einer alternativen Ausführungsform der Erfindung ist vorgesehen, dass die Aufnahme beim Verlagern in ihre Betriebsposition durch die Bewegungserzeugungsvorrichtung derart entlang der Bewegungsrichtung mit einer vordefinierbaren Kraft gegen die Tragstruktur gedrückt wird, dass der Kraftfahrzeugsitz zum Vergrößern eines Entfaltungsraumes des Gassackes bzw. eines Absorptionsweges zwischen der Tragstruktur und dem Kraftfahrzeugsitz entgegen der Bewegungsrichtung deformiert wird. Hierbei handelt es sich insbesondere um eine Deformation eine Sitzlehne des Kraftfahrzeugsitzes bzw. einer davon abgehenden Lehnenwange.

Eine weitere Variante der Erfindung sieht vor, den Kraftfahrzeugsitz linear verschieblich entgegen der Bewegungsrichtung im Kraftfahrzeug zu lagern, wobei bevorzugt die Aufnahme beim Verschieben in die Betriebsposition durch die Bewegungserzeugungsvorrichtung gegen die Innenseite der Tragstruktur gedrückt wird, um den Kraftfahrzeugsitz entgegen der Bewegungsrichtung von der Tragstruktur weg zu verlagern. Hierdurch kann mit Vorteil der Absorptionsweg vergrößert werden, was das Verletzungsrisiko eines den Kraftfahrzeugsitz belegenden Insassen bei einer Intrusion der Tragstruktur in Richtung des Innenraumes des Kraftfahrzeuges entsprechend verringert.

Bevorzugt ist am öffenbaren Bereich der vorzugsweise als starres Gehäuse ausgebildeten Aufnahme einen Schwächungsbereich ausgebildet, an dem entlang der öffenbare Bereich aufreißt, wenn der Gassack beim Aufblasen entlang der Fahrzeuglängsachse gegen den öffenbaren Bereich drückt. Der Schwächungsbereich kann dabei linienförmig ausgeformt sein. Insbesondere kann der Schwächungsbereich bei einem öffenbaren Bereich in Form einer Folie oder eines Gewebes als eine Reißnaht, eine Klebung oder ein Bereich vergleichsweise geringer Materialstärke ausgebildet sein.

Die Aufnahme umschließt den Gassack vor dem Öffnen des öffenbaren Bereiches mit Vorteil vollständig, um das Risiko einer Beschädigung des Gassackes beim Ausstellen in die Betriebsposition auszuschalten. Bevorzugt ist der Gasgenerator ebenfalls in der Aufnahme angeordnet, und zwar bevorzugt innerhalb des Gassackes.

Ein Ausführungsbeispiel der Erfindung sieht vor, dass die Aufnahme zum Verlagern aus der Ruheposition in die Betriebsposition linear verschieblich entlang der Bewegungsrichtung am Kraftfahrzeugsitz gelagert ist, und zwar insbesondere in einer Sitzlehne des Kraftfahrzeugsitzes, die eine Anlagefläche für den Rücken eines den Kraftfahrzeugsitz bestimmungsgemäß belegenden Insassen bildet. Die Sitzlehne weist dabei bevorzugt eine quer zur Bewegungsrichtung über die Anlagefläche der Sitzlehne hinausstehende Lehnenwange auf, die entlang der Bewegungsrichtung zwischen dem den Sitz belegenden Insassen und der Tragstruktur angeordnet ist, wobei die Lehnenwange zum Abstützen einer der Tragstruktur zugewandten Körperseite des den Kraftfahrzeugsitz belegenden Insassen eingerichtet und vorgesehen ist. Eine weitere derartige Lehnenwange liegt der einen Lehnenwange (bezogen auf einen in ein Kraftfahrzeug eingebauten Zustand) entlang der Fahrzeugquerachse gegenüber, so dass ein den Kraftfahrzeugsitz belegender Insasse zumindest teilweise entlang der Bewegungsrichtung (Fahrzeugquerachse y) zwischen den beiden Lehnenwangen angeordnet ist.

Bevorzugt wird die an der Sitzlehne verschieblich gelagerte Aufnahme in der Ruheposition von einer äußersten Umhüllung der Sitzlehne verdeckt, so dass die in der Ruheposition befindliche Aufnahme beim Betrachten des Kraftfahrzeugsitzes nicht wahrnehmbar ist.

In einer Variante der Erfindung ist die Aufnahme derart in der Sitzlehne gelagert, dass die Lehnenwange entgegen der Bewegungsrichtung der Aufnahme durch Deformation der Lehnenwange zur Anlage an einen den Kraftfahrzeugsitz belegenden Insassen gebracht wird, wenn die Aufnahme beim Bewegen in die Betriebsposition gegen die Innenseite der Tragstruktur gedrückt wird.

Zur Erzeugung der Bewegung der Aufnahme aus der Ruheposition in die Betriebsposition umfasst die Bewegungserzeugungsvorrichtung zumindest eine vorspannbare Feder, deren Entspannungsbewegung die Bewegung der Aufnahme erzeugt. Hierzu koppelt die Feder die Aufnahme mit einem Lehnenrahmen der Sitzlehne, an dem die Aufnahme zwischen der Ruheposition und der Betriebsposition hin und her bewegbar gelagert ist, wobei die Feder in der Ruheposition der Aufnahme die Aufnahme gegen den Lehnenrahmen vorspannt, so dass die Aufnahme bei einer Entspannungsbewegung der Feder entlang der Bewegungsrichtung in ihre Betriebsposition verlagert wird.

Zum Arretieren der Aufnahme in der Ruheposition ist ein erstes Verriegelungselement vorgesehen, das zwischen zwei Positionen hin und her bewegbar, insbesondere schwenkbar, an der Aufnahme gelagert ist, wobei das erste Verriegelungselement in der ersten Position eine Entspannungsbewegung der Feder verhindert und durch eine Bewegung in die zweite Position die Feder freigibt, so dass die Aufnahme durch die Feder aus der Ruheposition in die Betriebsposition bewegt wird.

Bevorzugt ist eine weitere Bewegungserzeugungsvorrichtung vorgesehen, die zum Verschwenken des ersten Verriegelungselementes in die zweite Position mit der Pre-Crash-Detektionsvorrichtung zusammenwirkt (erstes Ausgangsignal). Insbesondere umfasst diese weitere Bewegungserzeugungsvorrichtung eine Magnetspule, die dazu eingerichtet und vorgesehen ist ein Koppelelement, z.B. in Form eines Stiftes, gegen das erste Verriegelungselement zu drücken, um dieses aus der ersten Position in die zweite Position zu verschwenken, in der das erste Verriegelungselement die Feder freigibt.

Ein Auslösung jener weiteren Bewegungserzeugungsvorrichtung erfolgt durch eine mit der Magnetspule zusammenwirkende Steuerelektronik, die beim Empfangen des ersten Ausgangsignals der Pre-Crash-Detektionsvorrichtung die Magnetspule zum Verschwenken des ersten Verriegelungselementes in die zweite Position aktiviert.

Bevorzugt ist weiterhin ein zweites Verriegelungselement vorgesehen, das dazu eingerichtet und vorgesehen ist, beim Bewegen der Aufnahme zwischen der Ruheposition und der Betriebsposition an einem Bereich des Lehnenrahmens entlang zu gleiten, wobei das zweite Verriegelungselement gegen jenen Bereich vorgespannt ist, so dass das zweite Verriegelungselement beim Entlanggleiten an dem Bereich mit mindestens einer am Bereich ausgebildete Ausnehmung in Eingriff treten kann.

Diese mindestens eine Ausnehmung bildet dabei ein Widerlager für die Aufnahme, das die auf die Aufnahme entgegen der Bewegungsrichtung wirkende Kräfte aufnimmt, so dass die Aufnahme nicht entgegen der Bewegungsrichtung aus ihrer Betriebsposition heraus verschoben werden kann, wenn das zweite Verriegelungselement mit der mindestens einen Ausnehmung in Eingriff steht.

Vorzugsweise sind eine Mehrzahl von Ausnehmungen an dem besagten Bereich des Lehnenrahmens vorgesehen, mit denen das zweite Verriegelungselement beim Entlanggleiten an jenem Bereich in Eingriff treten kann.

In einer Variante der Erfindung ist das zweite Verriegelungselement als ein zwischen zwei Positionen hin und her schwenkbarer Hebel ausgebildet, der sich in seiner ersten Position außer Eingriff mit der mindestens einen Ausnehmung befindet und der in seiner zweiten Position in Eingriff mit der mindestens einen Ausnehmung steht. Dabei ist dieser Hebel in der ersten Position stets in Richtung auf die zweite Position vorgespannt, so dass er in die mindestens eine Ausnehmung hineingedrückt wird, wenn er an dieser vorbei gleitet.

In einer Weiterbildung der Erfindung ist vorgesehen, dass die Aufnahme reversibel zwischen der Ruheposition und der Betriebsposition hin und her bewegbar ausgebildet ist, wobei bevorzugt die Pre-Crash-Detektionsvorrichtung bei Nichteintreten einer durch sie vorhergesagten Krafteinwirkung auf die Außenseite der Tragstruktur anstelle des zweiten Ausgangssignals ein drittes Ausgangssignal vorsieht, das ein Verlagern der Aufnahme aus der Betriebsposition zurück in die Ruheposition auslöst.

Bevorzugt umfasst die Tragstruktur eine Auswahl der folgenden Kraftfahrzeugteile: einen seitlichen Karosseriebereich, eine seitliche Kraftfahrzeugtür und eine Kraftfahrzeugsäule. Vorliegend ist ferner der Kraftfahrzeugsitz bevorzugt als ein Fahrersitz oder ein Beifahrersitz eines Kraftfahrzeuges ausgebildet.

Weitere Einzelheiten und Vorteile der Erfindung werden bei der nachfolgenden Beschreibung von Ausführungsbeispielen anhand der Figuren deutlich werden.

Es zeigen:
- Figur 1: eine schematische Draufsicht auf eine Insassenrückhalteeinrichtung, mit einem ausstellbaren Gassack, und
- Figur 2: eine schematische Rückansicht einer Insassenrückhalteeinrichtung der in der Figur 1 gezeigten Art.

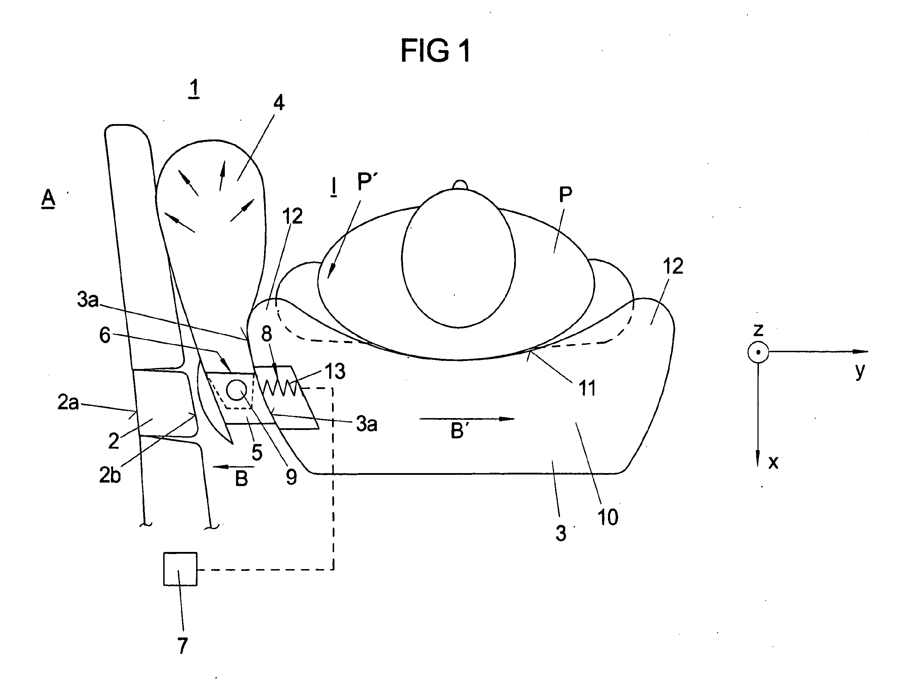

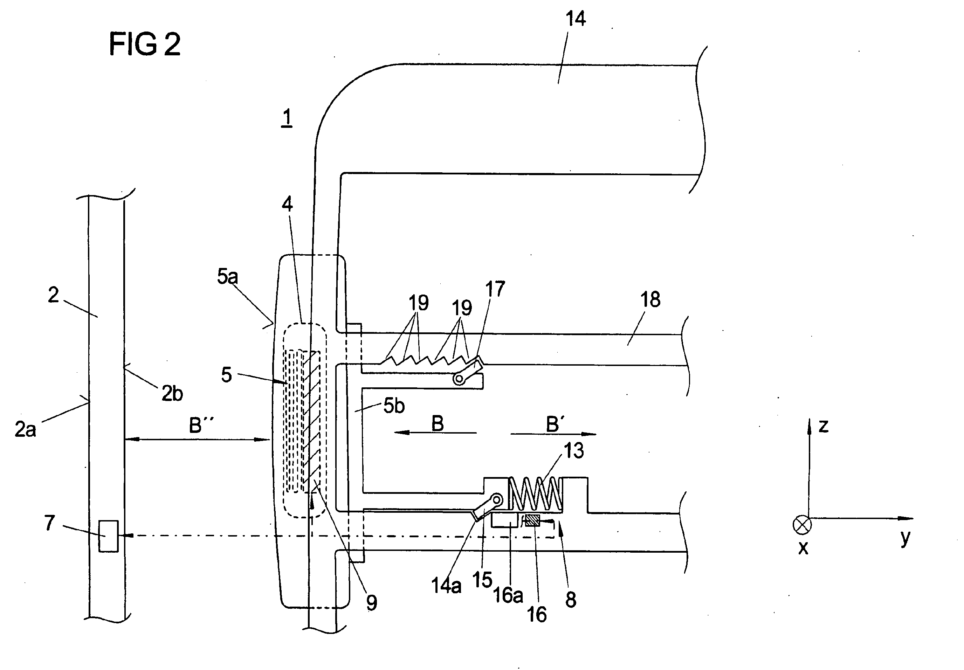

Figur 1 zeigt im Zusammenhang mit Figur 2 eine schematische Ansicht einer Insassenrückhalteeinrichtung 1, mit einem Kraftfahrzeugsitz 3, der in der Figur 1 als ein Fahrersitz ausgebildet ist und mit einer benachbart zum Kraftfahrzeugsitz 3 angeordneten Tragstruktur 2, bei der es sich um eine B-Säule eines Kraftfahrzeuges handelt. Die Tragstruktur 2 weist eine dem Außenraum A des Kraftfahrzeuges zugewandte Außenseite 2a und eine der Außenseite 2a abgewandte Innenseite 2b auf, die einer Außenseite 3a des Kraftfahrzeugsitzes 3 zugewandt ist.

Die Insassenrückhalteeinrichtung 1 dient zum Schutz eines den Kraftfahrzeugsitz 3 belegenden Insassen P vor einer vom Außenraum A her erfolgenden Krafteinwirkung auf die Außenseite 2a der Tragstruktur A entlang einer Richtung, die zumindest eine Komponente entlang der Fahrzeugquerachse y aufweist. Derartige Krafteinwirkungen treten üblicherweise bei einem Seitencrash auf, bei dem ein Kollisionsobjekt (z.B. ein Kraftfahrzeug) mit einer seitlichen Karosserie, vorliegend der Außenseite 2a der Tragstruktur 2, des Kraftfahrzeuges kollidiert.

Zum Schutz des Insassen P weist die Insassenrückhalteeinrichtung 1 einen Gassack 4 auf, der mittels eines Gasgenerators 9 mit Gas aufblasbar ist. Der Gassack 4 und der gasleitend mit dem Gassack 4 verbundene Gasgenerator 9 sind in einer Aufnahme 5 angeordnet, die als ein starres Gehäuse ausgebildet ist, mit Ausnahme einer Gehäuseseite der Aufnahme 5, die - bezogen auf einen in ein Kraftfahrzeug eingebauten Zustand der Aufnahme 5 - entlang der Fahrzeuglängsachse x der Fahrzeugfront zugewandt ist und als ein flexibler, öffenbarer Bereich 6 ausgebildet ist, der aufreißt, wenn der Gassack 4 beim Aufblasen aufgrund seiner Volumenzunahme gegen den öffenbaren Bereich 6 drückt.

Der Kraftfahrzeugsitz 3 weist des Weiteren eine Sitzlehne 10 auf, die eine Anlagefläche 11 für den Rücken eines den Kraftfahrzeugsitz 3 bestimmungsgemäß belegenden Insassen P ausbildet und die als versteifenden Grundkörper einen Lehnenrahmen 14 umfasst. Entlang der Fahrzeuglängsachse x steht an einem der Tragstruktur 2 zugewandten Randbereich der Sitzlehne 10 eine Lehnenwange 12 über die Anlagefläche 11 hinaus, so dass die Lehnenwange 12 entlang der Fahrzeugquerachse y zum Abstützen einer der Tragstruktur 2 zugewandten Körperseite P' des Insassen P zumindest abschnittsweise zwischen der Körperseite P' des Insassen P und der Tragstruktur 2 angeordnet ist.

Die Aufnahme 5 ist linear verschieblich entlang einer Bewegungsrichtung B, die parallel zu Fahrzeuglängsachse y verläuft am Lehnenrahmen 14 des Kraftfahrzeugsitzes 3 gelagert, so dass sie aus einer Ruheposition, in der die Aufnahme 5 vollkommen innerhalb der Sitzlehne 10 des Kraftfahrzeugsitzes 3 angeordnet ist, in eine Betriebsposition bewegbar ist, in der die Aufnahme 5 vorzugsweise durch Drücken gegen die Innenseite 2b der Tragstruktur 2 entlang der Bewegungsrichtung B mechanisch an die Tragstruktur 2 ankoppelt. Hierdurch wird einer Intrusion und somit einem Verdämmen des Absorptionsweges B" (entlang der Bewegungsrichtung B) zwischen der Innenseite 2b der Tragstruktur 2 und der Außenseite 3a des Kraftfahrzeugsitzes 3 entgegengewirkt, wenn ein Kollisionsobjekt mit einer Bewegungskomponente entlang der Fahrzeugquerachse y vom Außenraum A her auf die Außenseite 2a der Tragstruktur 2 auftrifft. Zusätzlich besteht die Möglichkeit, dass die Aufnahme 5 beim Verlagern in die Betriebsposition derart gegen die Innenseite 2b der Tragstruktur 2 gedrückt wird, dass eine Kraft entlang einer entgegen gesetzt zur Bewegungsrichtung B orientierten Kraftrichtung B' in den Kraftfahrzeugsitz 3 eingeleitet wird, die diesen entlang der Kraftrichtung B', die vorliegend parallel zur Fahrzeugquerachse y verläuft, zum Innenraum hin verschiebt. Hierdurch wird der wirksame Absorptionsweg B" zum Schutz des Insassen P verlängert.

Die Anlageseite 5a des Gehäuses 5, die beim Bewegen aus der Ruheposition in die Betriebsposition zur Anlage an die Innenseite 2b der Tragstruktur gebracht wird, ist vorzugsweise besonders stabil ausgebildet, damit eine gute mechanische Ankopplung an die Tragstruktur 2 möglich ist. In der Ruheposition ist die Anlageseite 5a bevorzugt bündig in die der Tragstruktur 2 zugewandte Außenseite 3a des Kraftfahrzeugsitzes 3 bzw. dessen Sitzlehne 10 eingelassen.

Des Weiteren wird durch das Verschieben der Aufnahme 5 in ihre Betriebsposition der öffenbare Bereich 6 entlang der Bewegungsrichtung B (Fahrzeugquerachse y) zwischen der Tragstruktur 2 und dem Kraftfahrzeugsitz 3 positioniert, so dass sich der Gassack 4 durch den (geöffneten) öffenbaren Bereich 6 hindurch frei (ungehindert) in Geradeausfahrtrichtung entfalten kann, um den Insassen P vor einem eindringenden Kollisionsobjekt zu schützen.

Damit das Verfahren der Aufnahme 5 rechtzeitig erfolgen kann, ist eine Pre-Crash-Detektionsvorrichtung 7 vorgesehen, die mit einer Bewegungserzeugungsvorrichtung 8, die die Aufnahme 5 aus ihrer Ruheposition in ihre Betriebsposition verfährt sowie dem Gasgenerator 9 zusammenwirkt.

Erkennt die Pre-Crash-Detektionsvorrichtung 7 (z.B. Radar) einen bevorstehenden Seitencrash, so erzeugt sie ein erstes Ausgangsignal, das ein Auslösen der Bewegungserzeugungsvorrichtung 8 bewirkt, die daraufhin die Aufnahme 5 aus der Ruheposition in die Betriebsposition bewegt. Auf ein zweites Ausgangssignal der Pre-Crash-Detektionsvorrichtung 7 hin wird der Gasgenerator 9 gezündet, der hiernach den Gassack 4 aus der in der Betriebsposition befindlichen Aufnahme 5 heraus entfaltet. Kann der vorhergesagte Seitencrash abgewendet werden, sieht die Pre-Crash-Detektionsvorrichtung 7 - bei einer reversibel arbeitenden Bewegungserzeugungsvorrichtung 8 - anstelle des zweiten Ausgangssignals ein drittes Ausgangsignal vor, welches ein Zurückfahren der Aufnahme 5 aus ihrer Betriebsposition in ihre Ruheposition auslöst.

Figur 2 zeigt eine Variante der Bewegungserzeugungsvorrichtung 8 im Detail. Zur linear verschieblichen Lagerung der Aufnahme 5 am Lehnenrahmen 14 weist diese ein (starr mit der Aufnahme 5 verbundenes) Trägerelement 5b auf, das in der Ruheposition mittels einer gespannten Feder 13 gegen den Lehnenrahmen 12 vorgespannt ist, so dass eine Entspannungsbewegung der Feder 13 zu einer Verlagerung der Aufnahme 5 (samt Träger 5b) entlang der Bewegungsrichtung B zur Tragstruktur 2 hin erfolgt.

Zum Arretieren der Aufnahme 5 in der Ruheposition ist ein erstes Verriegelungselement 15 vorgesehen, das zwischen einer ersten und einer zweiten Position hin und her schwenkbar am Träger 5b gelagert ist, wobei das erste Verriegelungselement 15 in der ersten Position in Eingriff mit einer Ausnehmung 14a des Lehnenrahmens 14 steht, die die Kraft aufnimmt, mit der die Feder 13 entlang der Bewegungsrichtung B gegen den Träger 5b vorgespannt ist. Zum Verschwenken des ersten Verriegelungselementes 15 in die zweite Position, in der das Verriegelungselement 15 den Träger 5b freigibt, so dass die Feder 13 die Aufnahme 5 in die Betriebsposition verschieben kann, ist eine Magnetspule 16 vorgesehen, die auf das erste Signal der Pre-Crash-Detektionsvorrichtung 7 hin einen Stift 16a gegen das erste Verrieglungselement 15 drückt, so dass dieses außer Eingriff mit der Ausnehmung 14a des Lehnenrahmens 14 gerät. Damit eine kontrollierte Verlagerung der Aufnahme 5 in Richtung auf die Tragstruktur 2 möglich ist, ist die Aufnahme 5 über den Träger 5b am Lehnenrahmen 14 längsverschieblich entlang der Bewegungsrichtung B geführt.

Mittels eines zweiten Verriegelungselementes 17 wird beim Verlagern der Aufnahme 5 in die Betriebsposition verhindert, dass ein die Tragstruktur 2 intrudierendes Kollisionsobjekt beim Einwirken auf die Aufnahme 5 entgegen der Bewegungsrichtung B die Aufnahme 5 zurück in die Ruheposition verschiebt. Hierzu ist das zweite Verriegelungselement 17 als ein verschwenkbarer, am Träger 5b schwenkbar gelagerter Hebel ausgebildet, der beim Bewegen der Aufnahme 5 aus der Ruheposition in die Betriebsposition gegen einen entlang der Fahrzeugquerachse y erstreckten Bereich 18 des Lehnenrahmens 14 vorgespannt ist und an diesem entlang gleiten kann. Beim Entlanggleiten am Bereich 18 rastet das zweite Verriegelungselement 17 in entlang des Bereiches 18 vorgesehene Ausnehmungen 19 ein, die so ausgebildet sind, dass das zweite Verriegelungselement 17 beim Bewegen in Richtung auf die Betriebsposition automatisch wieder außer Eingriff mit einer derartigen Ausnehmung 19 gerät, wobei jede der Ausnehmungen 19 als ein Widerlager für den mit dem zweiten Verriegelungselement 17 verbundenen Träger 5b der Aufnahme 5 wirkt, wenn dieser entgegen der Bewegungsrichtung B mit einer Kraft beaufschlagt wird (intrudierendes Kollisionsobjekt). Oder anders gesagt, rastet das zweite Verriegelungselement 17 bei der Bewegung des Trägers 5a entgegen der Bewegungsrichtung B in eine Ausnehmung 19 des Bereiches 18 ein, kann es nicht mehr außer Eingriff mit der betreffenden Ausnehmung 19 gelangen, es sein denn, eine quer zur Bewegungsrichtung B orientierte Kraft verschwenkt das zweite Verriegelungselement 17 aus der betreffenden Ausnehmung 19 heraus. Hierfür kann ggf. ein separater Aktuator vorgesehen sein.

Durch Ausbilden einer Mehrzahl solcher Ausnehmungen 19 am Bereich 18 des Lehnenrahmens 14, und zwar entlang des gesamten Verfahrweges des Trägers 5b entlang der Bewegungsrichtung B wird sichergestellt, dass das zweite Verriegelungselement 17 entlang des gesamten Verfahrweges stets ein Widerlager 19 findet, wenn ein intrudierendes Kollisionsobjekt entgegen der Bewegungsrichtung B auf die Aufnahme 5 einwirkt.

## Patentansprüche

1. Insassenrückhalteeinrichtung für ein Kraftfahrzeug, mit
- einer Tragstruktur (2) eines Kraftfahrzeuges, die, bezogen auf einen in ein Kraftfahrzeug eingebauten Zustand, eine einem Außenraum (A) des Kraftfahrzeuges zugewandte Außenseite (2a) und eine einem Innenraum (I) des Kraftfahrzeuges zugewandte Innenseite (2b) aufweist,
- einem Kraftfahrzeugsitz (3), mit einer der Innenseite (2b) der Tragstruktur (2) zugewandten Außenseite (3a),
- einem Gassack (4), der zum Schutz eines Insassen angesichts einer vom Außenraum (A) her auf die Außenseite (2a) der Tragstruktur (2) erfolgenden Krafteinwirkung entfaltbar ist,
- einer Aufnahme (5) des Gassackes (4), die an der Außenseite (3a) des Kraftfahrzeugsitzes (3) angeordnet ist, und
- einem öffenbaren Bereich (6) der Aufnahme (5), durch den hindurch der Gassack (4) in den Innenraum (I) des Kraftfahrzeuges entfaltbar ist,
**gekennzeichnet durch,**
eine Pre-Crash-Detektionsvorrichtung (7) zum Erkennen einer bevorstehenden, vom Außenraum (A) her auf die Außenseite (2a) der Tragstruktur (2) erfolgenden Krafteinwirkung, die beim Erkennen einer bevorstehenden Krafteinwirkung eine Verlagerung der Aufnahme (5) des Gassackes (4) aus einer Ruheposition in eine Betriebsposition entlang einer von der Außenseite (3a) des Kraftfahrzeugsitzes (3) zur Innenseite (2b) der Tragstruktur (2) gerichteten Bewegungsrichtung (B) auslöst.

2. Insassenrückhalteeinrichtung nach Anspruch 1, **dadurch gekennzeichnet, dass** der öffenbare Bereich (6) durch die Verlagerung der Aufnahme (5) aus der Ruheposition in die Betriebsposition zwischen der Innenseite (2b) der Tragstruktur (2) und der Außenseite (3a) des Kraftfahrzeugsitzes (3) positioniert wird, so dass sich der Gassack (4) quer zur Bewegungsrichtung (B) zwischen der Innenseite (2b) der Tragstruktur (2) und der Außenseite (3a) des Kraftfahrzeugsitzes (3) entfalten kann.

3. Insassenrückhalteeinrichtung nach Anspruch 1 oder 2, **dadurch gekennzeichnet, dass** der Gassack (4) - bezogen auf einen in ein Kraftfahrzeug eingebauten Zustand - dazu eingerichtet und vorgesehen ist, sich beim Aufblasen entlang der Fahrzeuglängsachse (x) in Geradeausfahrtrichtung zu entfalten.

4. Insassenrückhalteeinrichtung nach einem der vorangegangenen Ansprüche, **dadurch gekennzeichnet, dass** eine mit der Pre-Crash-Detektionsvorrichtung (7) zusammenwirkende Bewegungserzeugungsvorrichtung (8) vorgesehen ist, die dazu eingerichtet und vorgesehen ist, die Aufnahme (5) aus der Ruheposition in die Betriebsposition zu bewegen, wenn die Pre-Crash-Detektionsvorrichtung (7) einer bevorstehende Krafteinwirkung erkennt (erfasst).

5. Insassenrückhalteeinrichtung nach Anspruch 4, **dadurch gekennzeichnet, dass** die Pre-Crash-Detektionsvorrichtung (7) dazu eingerichtet und vorgesehen ist, beim Erkennen einer bevorstehenden Krafteinwirkung auf die Außenseite (2a) der Tragstruktur (2) ein erstes Ausgangssignal zu erzeugen, dass ein Auslösen der Bewegungserzeugungsvorrichtung (8) bewirkt, so dass die Bewegungserzeugungsvorrichtung (8) die Aufnahme aus der Ruheposition in die Betriebsposition verlagert.

6. Insassenrückhalteeinrichtung nach einem der vorangegangenen Ansprüche, **gekennzeichnet durch** einen Gasgenerator (9) zum Aufblasen des Gassackes (4), der dazu eingerichtet und vorgesehen ist, zum Aufblasen des Gassackes (4) ein Gas freizusetzen, wenn sich die Aufnahme (5) in ihrer Betriebsposition befindet.

7. Insassenrückhalteeinrichtung nach Anspruch 6, **dadurch gekennzeichnet, dass** die Pre-Crash-Detektionsvorrichtung (7) dazu eingerichtet und vorgesehen ist, beim Erkennen einer bevorstehenden Krafteinwirkung auf die Außenseite (2a) der Tragstruktur (2) ein zweites Ausgangssignal zu erzeugen, dass den Gasgenerator (9) zum Aufblasen des Gassackes (4) aktiviert, wenn sich die Aufnahme (5) in der Betriebsposition befindet.

8. Insassenrückhalteeinrichtung nach Anspruch 6, **gekennzeichnet durch** einen mit dem Gasgenerator (9) zusammenwirkenden Crashsensor, der dazu eingerichtet und vorgesehen ist, den Gasgenerator (9) zum Aufblasen des Gassackes (4) beim Erfassen einer Krafteinwirkung auf die Außenseite (2a) der Tragstruktur (2) auszulösen, wenn die Aufnahme (5) sich in ihrer Betriebsposition befindet.

9. Insassenrückhalteeinrichtung nach einem der vorangegangenen Ansprüche,
**dadurch gekennzeichnet, dass** sich die Aufnahme (5) in ihrer Betriebsposition an der Innenseite (2b) der Tragstruktur (2) abstützt, um bei einer auf die Außenseite (2a) der Tragstruktur (2) einwirkenden Krafteinwirkung einer Deformation der Tragstruktur (2) entgegen der Bewegungsrichtung (B) entgegenzuwirken.

10. Insassenrückhalteeinrichtung nach Anspruch 4 oder einem der Ansprüche 5 bis 9 soweit rückbezogen auf Anspruch 4, **dadurch gekennzeichnet, dass** die Aufnahme (5) beim Verlagern in ihre Betriebsposition durch die Bewegungserzeugungsvorrichtung (8) derart entlang der Bewegungsrichtung (B) gegen die Tragstruktur (2) gedrückt wird, dass der Kraftfahrzeugsitz (3) zur Aufrechterhaltung eines Entfaltungsraumes des Gassackes (4) entgegen der Bewegungsrichtung (B) deformiert wird.

11. Insassenrückhalteeinrichtung nach Anspruch 4 oder einem der Ansprüche 5 bis 9 soweit rückbezogen auf Anspruch 4, **dadurch gekennzeichnet, dass** die Aufnahme (5) durch die Bewegungserzeugungsvorrichtung (8) nur soweit entlang der Bewegungsrichtung (B) verlagert wird, dass die Aufnahme (5) die Innenseite (2b) der Tragstruktur (2) in der Betriebsposition gerade berührt.

12. Insassenrückhalteeinrichtung nach einem der Ansprüche 1 bis 10, **dadurch gekennzeichnet, dass** der Kraftfahrzeugsitz (3) dazu eingerichtet und vorgesehen ist, linear verschieblich entlang der Bewegungsrichtung (B) in einem Kraftfahrzeug gelagert zu werden.

13. Insassenrückhaltevorrichtung nach Anspruch 12, **dadurch gekennzeichnet, dass** die Aufnahme (5) beim Verlagern in die Betriebsposition durch die Bewegungserzeugungsvorrichtung (8) gegen die Innenseite (2b) der Tragstruktur (2) gedrückt wird, um den Kraftfahrzeugsitz entgegen der Bewegungsrichtung (B) von der Tragstruktur weg zu verlagern.

14. Insassenrückhalteeinrichtung nach einem der vorangegangenen Ansprüche,
**dadurch gekennzeichnet, dass** der öffenbare Bereich (6) der Aufnahme (5) einen Schwächungsbereich umfasst, entlang dem der öffenbare Bereich (6) aufreißt, wenn der Gassack beim Aufblasen gegen den öffenbaren Bereich drückt.

15. Insassenrückhalteeinrichtung nach einem der vorangegangenen Ansprüche, **dadurch gekennzeichnet, dass** die Aufnahme (5) zumindest teilweise als starres Gehäuse ausgebildet ist.

16. Insassenrückhalteinrichtung nach Anspruch 6 oder einem der Ansprüche 7 bis 15 soweit rückbezogen auf Anspruch 6, **dadurch gekennzeichnet, dass** die Aufnahme (5) den Gassack und den Gasgenerator umgibt.

17. Insassenrückhalteeinrichtung nach einem der vorangegangenen Ansprüche, **dadurch gekennzeichnet, dass** die Aufnahme (5) zum Verlagern aus der Ruheposition in die Betriebsposition linear verschieblich entlang der Bewegungsrichtung (B) am Kraftfahrzeugsitz (3) gelagert ist.

18. Insassenrückhalteeinrichtung nach einem der vorangegangenen Ansprüche, **dadurch gekennzeichnet, dass** der Kraftfahrzeugsitz (3) eine Sitzlehne (10) aufweist, die eine Anlagefläche (11) für den Rücken eines den Kraftfahrzeugsitz (3) belegenden Insassen (P) bildet.

19. Insassenrückhalteeinrichtung nach Anspruch 18, **dadurch gekennzeichnet, dass** die Aufnahme (5) zum Verlagern aus der Ruheposition in die Betriebsposition linear verschieblich entlang der Bewegungsrichtung (B) in der Sitzlehne (10) gelagert ist, so dass die Aufnahme (5) in der Ruheposition von einer äußersten Umhüllung der Sitzlehne (10) verdeckt wird.

20. Insassenrückhalteeinrichtung nach einem der Ansprüche 18 oder 19, **dadurch gekennzeichnet, dass** die Sitzlehne (10) eine quer zur Bewegungsrichtung (B) über die Anlagefläche (11) der Sitzlehne (10) hinaus stehende Lehnenwange (12) aufweist, die entlang der Bewegungsrichtung (B) zwischen einem den Kraftfahrzeugsitz (3) belegenden Insassen (P) und der Tragstruktur (2) angeordnet ist und die zum Abstützen einer der Tragstruktur (2) zugewandten Körperseite (P') des den Kraftfahrzeugsitz (3) belegenden Insassen (P) eingerichtet und vorgesehen ist.

21. Insassenrückhalteeinrichtung nach Anspruch 20 soweit nicht rückbezogen nach Anspruch 11, **dadurch gekennzeichnet, dass** die Aufnahme (5) zum Verlagern aus der Ruheposition in die Betriebsposition derart linear verschieblich entlang der Bewegungsrichtung (B) in der Sitzlehne (10) gelagert ist, dass sie die Lehnenwange (12) entgegen der Bewegungsrichtung (B) gegen eine der Tragstruktur (2) zugewandte Körperseite (P') eines den Kraftfahrzeugsitz (3) belegenden Insassen (P) drückt, wenn die Aufnahme (5) beim Bewegen in ihre Betriebsposition entlang der Bewehungsrichtung (B) gegen die Innenseite (2b) der Tragstruktur (2) drückt.

22. Insassenrückhalteeinrichtung nach einem der vorangegangenen Ansprüche, **dadurch gekennzeichnet, dass** die Bewegungserzeugungsvorrichtung (8) zur Erzeugung der Bewegung der Aufnahme (5) aus der Ruheposition in die Betriebsposition eine vorspannbare Feder (13) aufweist, deren Entspannungsbewegung die Bewegung der Aufnahme (5) erzeugt.

23. Insassenrückhalteeinrichtung nach Anspruch 18 oder einem der Ansprüche 19 bis 22 soweit rückbezogen auf Anspruch 18, **dadurch gekennzeichnet, dass** der Kraftfahrzeugsitz (3) einen Lehnenrahmen (14) als Grundkörper der Sitzlehne (10) aufweist.

24. Insassenrückhalteeinrichtung Anspruch 23, **dadurch gekennzeichnet, dass** die Aufnahme (5) zum Verlagern aus der Ruheposition in die Betriebsposition linear verschieblich entlang der Bewegungsrichtung (B) am Lehnenrahmen (14) gelagert ist.

25. Insassenrückhalteeinrichtung nach Anspruch 22 und Anspruch 23 oder 24, **dadurch gekennzeichnet, dass** die Feder (13) in der Ruheposition der Aufnahme (5) die Aufnahme (5) gegen den Lehnenrahmen (14) vorspannt, so dass die Aufnahme (5) bei einer Entspannungsbewegung der Feder (13) entlang der Bewegungsrichtung (B) in ihre Betriebsposition verlagert wird.

26. Insassenrückhalteeinrichtung 22 oder einem der Ansprüche 23 bis 25 soweit rückbezogen auf Anspruch 22, **dadurch gekennzeichnet, dass** ein erstes Verriegelungselement (15) vorgesehen ist, das zwischen zwei Positionen hin und her bewegbar ausgebildet ist, wobei das erste Verriegelungselement (15) in der ersten Position eine Entspannungsbewegung der Feder (13) verhindert und durch eine Bewegung in die zweite Position die Feder (13) freigibt, so dass die Aufnahme (5) mittels der Feder (13) aus der Ruheposition in die Betriebsposition bewegt wird.

27. Insassenrückhaltevorrichtung nach Anspruch 26, **dadurch gekennzeichnet, dass** das erste Verriegelungselement (15) zwischen der ersten und der zweiten Position hin und her schwenkbar an der Aufnahme (5) gelagert ist

28. Insassenrückhaltevorrichtung nach Anspruch 22 und nach einem der Ansprüche 26 oder 27, **dadurch gekennzeichnet, dass** eine mit der Pre-Crash-Detektionsvorrichtung (8) zusammenwirkende weitere Bewegungserzeugungsvorrichtung (16) vorgesehen ist, die zum Freigeben der Feder (13) ein Verschwenken des ersten Verriegelungselementes (15) aus der ersten Position in die zweite Position bewirkt, wenn die Pre-Crash-Detektionsvorrichtung (7) eine bevorstehende Krafteinwirkung auf die Außenseite (2a) der Tragstruktur (2) erkennt.

29. Insassenrückhaltevorrichtung nach Anspruch 23 oder einem der Ansprüche 24 bis 28 soweit rückbezogen nach Anspruch 23, **dadurch gekennzeichnet, dass** ein zweites Verriegelungselement (17) vorgesehen ist, das dazu ausgebildet ist, beim Bewegen der Aufnahme (5) zwischen der Ruheposition und der Betriebsposition an einem Bereich (18) des Lehnenrahmens (14) entlang zu gleiten, wobei das zweite Verriegelungselement (17) gegen jenen Bereich (18) vorgespannt ist, so dass das zweite Verriegelungselement (17) beim Entlanggleiten an dem Bereich (18) mit mindestens einer am Bereich (18) ausgebildeten Ausnehmung (19) in Eingriff treten kann.

30. Insassenrückhalteeinrichtung nach Anspruch 29, **dadurch gekennzeichnet, dass** die Ausnehmung (19) ein Widerlager für die Aufnahme (5) bildet, das auf die Aufnahme (5) entgegen der Bewegungsrichtung (B) wirkende Kräfte aufnimmt, so dass die Aufnahme (5) nicht entgegen der Bewegungsrichtung (B) verschoben werden kann, wenn das zweite Verriegelungselement (17) mit der mindestens einen Ausnehmung (19) in Eingriff steht.

31. Insassenrückhalteeinrichtung nach Anspruch 29 oder 30, **dadurch gekennzeichnet, dass** eine Mehrzahl von Ausnehmungen (19) am Bereich (18) vorgesehen sind, mit denen das zweite Verriegelungselement (17) beim Entlanggleiten am Bereich (18) in Eingriff treten kann.

32. Insassenrückhalteeinrichtung nach Anspruch 29 oder einem der Ansprüche 30 oder 31 soweit rückbezogen auf Anspruch 29, **dadurch gekennzeichnet, dass** das zweite Verriegelungselement (17) als ein zwischen zwei Positionen hin und her schwenkbarer Hebel ausgebildet ist, der sich in seiner ersten Position außer Eingriff mit der mindestens einen Ausnehmung (19) befindet und der sich in seiner zweiten Position in Eingriff mit der mindestens einen Ausnehmung (19) befindet und dass der in der ersten Position befindliche Hebel (17) in Richtung auf die zweite Position vorgespannt ist.

33. Insassenrückhalteeinrichtung nach einem der vorangegangenen Ansprüche, **dadurch gekennzeichnet, dass** die Aufnahme (5) reversibel zwischen der Ruheposition und der Betriebsposition hin und her bewegbar ausgebildet ist.

34. Insassenrückhalteeinrichtung nach einem der vorangegangenen Ansprüche, **dadurch gekennzeichnet, dass** die Pre-Crash-Detektionsvorrichtung (7) bei Nichteintreten einer vorhergesagten Krafteinwirkung auf die Außenseite (2a) der Tragstruktur (2) ein drittes Ausgangssignal vorsieht, das ein Verlagern der Aufnahme (5) aus der Betriebsposition in die Ruheposition bewirkt.

35. Insassenrückhalteeinrichtung nach einem der vorangegangenen Ansprüche, **dadurch gekennzeichnet, dass** die Tragstruktur (2) eine Auswahl der folgenden Kraftfahrzeugteile umfasst:
- einen seitlichen Karosseriebereich,
- eine seitliche Kraftfahrzeugtür, und
- eine Kraftfahrzeugsäule.

36. Insassenrückhalteeinrichtung nach einem der vorangegangenen Ansprüche, **dadurch gekennzeichnet, dass** der Kraftfahrzeugsitz (3) als ein Fahrersitz oder ein Beifahrersitz eines Kraftfahrzeuges ausgebildet ist.

## Claims

1. An occupant restraint device for a motor vehicle, with
- a supporting structure (2) of a motor vehicle, which, with reference to a state in which it is fitted in a motor vehicle, has an outer side (2a) which faces an exterior space (A) of the motor vehicle, and an inner side (2b) which faces an interior (I) of the motor vehicle,
- a motor vehicle seat (3), with an outer side (3a) which faces the inner side (2b) of the supporting structure (2),
- an airbag (4) which can be deployed in order to protect an occupant in the face of an application of force taking place on the outer side (2a) of the supporting structure (2) from the exterior space (A),
- a receptacle (5) of the airbag (4), which is arranged on the outer side (3a) of the motor vehicle seat (3), and
- an openable region (6) of the receptacle (5), through which the airbag (4) can be deployed into the interior (I) of the motor vehicle,
**characterized by**
a pre-crash detection device (7) for identifying an imminent application of force which takes place on the outer side (2a) of the supporting structure (2) from the exterior space (A), which pre-crash detection device, upon identifying an imminent application of force, triggers a shifting of the receptacle (5) of the airbag (4) from an inoperative position into an operative position along a direction of movement (B) directed from the outer side (3a) of the motor vehicle seat (3) to the inner side (2b) of the supporting structure (2).

2. The occupant restraint device as claimed in claim 1, **characterized in that**, by the shifting of the receptacle (5) from the inoperative position into the operative position, the openable region (6) is positioned between the inner side (2b) of the supporting structure (2) and the outer side (3a) of the motor vehicle seat (3) such that the airbag (4) can be deployed transversely with respect to the direction of movement (B) between the inner side (2b) of the supporting structure (2) and the outer side (3a) of the motor vehicle seat (3).

3. The occupant restraint device as claimed in claim 1 or 2, **characterized in that** the airbag (4) - with reference to a state in which it is fitted in a motor vehicle - is configured and provided so as, upon inflation, to be deployed along the longitudinal axis (x) of the vehicle in the straight-ahead direction of travel.

4. The occupant restraint device as claimed in one of the preceding claims, **characterized in that** a movement generating device (8) is provided, the movement generating device interacting with the pre-crash detection device (7) and being configured and provided in order to move the receptacle (5) from the inoperative position into the operative position when the pre-crash detection device (7) identifies (detects) an imminent application of force.

5. The occupant restraint device as claimed in claim 4, **characterized in that** the pre-crash detection device (7) is configured and provided in order, when an imminent application of force to the outer side (2a) of the supporting structure (2) is identified, to generate a first output signal which brings about a triggering of the movement generating device (8) such that the movement generating device (8) shifts the receptacle from the inoperative position into the operative position.

6. The occupant restraint device as claimed in one of the preceding claims, **characterized by** a gas generator (9) for inflating the airbag (4), which gas generator is configured and provided in order to release a gas to inflate the airbag (4) when the receptacle (5) is in its operative position.

7. The occupant restraint device as claimed in claim 6, **characterized in that** the pre-crash detection device (7) is configured and provided in order, when an imminent application of force to the outer side (2a) of the supporting structure (2) is identified, to generate a second output signal which activates the gas generator (9) to inflate the airbag (4) when the receptacle (5) is in the operative position.

8. The occupant restraint device as claimed in claim 6, **characterized by** a crash sensor which interacts with the gas generator (9) and is configured and provided in order, when an application of force to the outer side (2a) of the supporting structure (2) is detected, to trigger the gas generator (9) to inflate the airbag (4) when the receptacle (5) is in its operative position.

9. The occupant restraint device as claimed in one of the preceding claims, **characterized in that** the receptacle (5), in its operative position, is supported on the inner side (2b) of the supporting structure (2) in order, in the event of an application of force acting on the outer side (2a) of the supporting structure (2), to oppose a deformation of the supporting structure (2) counter to the direction of movement (B).

10. The occupant restraint device as claimed in claim 4 or one of claims 5 to 9, insofar as they refer back to claim 4, **characterized in that,** during the shifting into its operative position, the receptacle (5) is pressed against the supporting structure (2) along the direction of movement (B) by the movement generating device (8) in such a manner that the motor vehicle seat (3) is deformed counter to the direction of movement (B) in order to maintain a deployment space of the airbag (4).

11. The occupant restraint device as claimed in claim 4 or one of claims 5 to 9, insofar as they refer back to claim 4, **characterized in that** the receptacle (5) is shifted along the direction of movement (B) by the movement generating device (8) only to the extent such that the receptacle (5) just touches the inner side (2b) of the supporting structure (2) in the operative position.

12. The occupant restraint device as claimed in one of claims 1 to 10, **characterized in that** the motor vehicle seat (3) is configured and provided so as to be mounted in a linearly displaceable manner along the direction of movement (B) in a motor vehicle.

13. The occupant restraint device as claimed in claim 12, **characterized in that,** during the shifting into the operative position, the receptacle (5) is pressed against the inner side (2b) of the supporting structure (2) by the movement generating device (8) in order to shift the motor vehicle seat away from the supporting structure counter to the direction of movement (B).

14. The occupant restraint device as claimed in one of the preceding claims, **characterized in that** the openable region (6) of the receptacle (5) comprises a region of weakness along which the openable region (6) tears when the airbag, upon inflation, presses against the openable region.

15. The occupant restraint device as claimed in one of the preceding claims, **characterized in that** the receptacle (5) is at least partially designed as a rigid housing.

16. The occupant restraint device as claimed in claim 6 or one of claims 7 to 15, insofar as they refer back to claim 6, **characterized in that** the receptacle (5) surrounds the airbag and the gas generator.

17. The occupant restraint device as claimed in one of the preceding claims, **characterized in that,** for shifting from the inoperative position into the operative position, the receptacle (5) is mounted on the motor vehicle seat (3) in a linearly displaceable manner along the direction of movement (B).

18. The occupant restraint device as claimed in one of the preceding claims, **characterized in that** the motor vehicle seat (3) has a seat back (10) which forms a bearing surface (11) for the back of an occupant (P) occupying the motor vehicle seat (3).

19. The occupant restraint device as claimed in claim 18, **characterized in that**, for shifting from the inoperative position into the operative position, the receptacle (5) is mounted in the seat back (10) in a linearly displaceable manner along the direction of movement (B) such that the receptacle (5) is concealed in the inoperative position by an outermost covering of the seat back (10).

20. The occupant restraint device as claimed in either of claims 18 and 19, **characterized in that** the seat back (10) has a backrest side cheek (12) which protrudes over the bearing surface (11) of the seat back (10) transversely with respect to the direction of movement (B) and is arranged along the direction of movement (B) between an occupant (P) occupying the motor vehicle seat (3) and the supporting structure (2), and which is configured and provided in order to support a body side (P') of the occupant (P) occupying the motor vehicle seat (3), which body side faces the supporting structure (2).

21. The occupant restraint device as claimed in claim 20, insofar as it does not refer back to claim 11, **characterized in that,** for shifting from the inoperative position into the operative position, the receptacle (5) is mounted in the seat back (10) in a linearly displaceable manner along the direction of movement (B) such that it presses the backrest side cheek (12) counter to the direction of movement (B) against a body side (P') of an occupant (P) occupying the motor vehicle seat (3), which body side faces the supporting structure (2), when the receptacle (5), during the movement into its operative position, presses along the direction of movement (B) against the inner side (2b) of the supporting structure (2).

22. The occupant restraint device as claimed in one of the preceding claims, **characterized in that,** in order to generate the movement of the receptacle (5) from the inoperative position into the operative position, the movement generating device (8) has a prestressable spring (13), the relaxation movement of which generates the movement of the receptacle (5).

23. The occupant restraint device as claimed in claim 18 or one of claims 19 to 22, insofar as they refer back to claim 18, **characterized in that** the motor vehicle seat (3) has a backrest frame (14) as the basic body of the seat back (10).

24. The occupant restraint device as claimed in claim 23, **characterized in that,** for shifting from the inoperative position into the operative position, the receptacle (5) is mounted on the backrest frame (14) in a linearly displaceable manner along the direction of movement (B).

25. The occupant restraint device as claimed in claim 22 and claim 23 or 24, **characterized in that,** in the inoperative position of the receptacle (5), the spring (13) prestresses the receptacle (5) against the backrest frame (14) such that, during a relaxation movement of the spring (13), the receptacle (5) is shifted along the direction of movement (B) into its operative position.

26. The occupant restraint device as claimed in claim 22 or one of claims 23 to 25, insofar as they refer back to claim 22, **characterized in that** a first locking element (15) which is designed such that it is movable to and fro between two positions is provided, the first locking element (15) in the first position preventing a relaxation movement of the spring (13) and, by movement into the second position, releasing the spring (13) such that the receptacle (5) is moved from the inoperative position into the operative position by means of the spring (13).

27. The occupant restraint device as claimed in claim 26, **characterized in that** the first locking element (15) is mounted on the receptacle (5) in a manner such that it is pivotable to and fro between the first and the second position.

28. The occupant restraint device as claimed in claim 22 and as claimed in either of claims 26 and 27, **characterized in that** a further movement generating device (16) is provided, the movement generating device interacting with the pre-crash detection device (8) and, in order to release the spring (13), bringing about a pivoting of the first locking element (15) from the first position into the second position when the pre-crash detection device (7) identifies an imminent application of force to the outer side (2a) of the supporting structure (2).

29. The occupant restraint device as claimed in claim 23 or one of claims 24 to 28, insofar as they refer back to claim 23, **characterized in that** a second locking element (17) is provided which is designed in order, during the movement of the receptacle (5) between the inoperative position and the operative position, to slide along a region (18) of the backrest frame (14), with the second locking element (17) being prestressed against that region (18) such that the second locking element (17), as it slides along the region (18), can enter into engagement with at least one recess (19) formed on the region (18).

30. The occupant restraint device as claimed in claim 29, **characterized in that** the recess (19) forms an abutment for the receptacle (5), the abutment absorbing the forces acting on the receptacle (5) counter to the direction of movement (B) such that the receptacle (5) cannot be displaced counter to the direction of movement (B) when the second locking element (17) is in engagement with the at least one recess (19).

31. The occupant restraint device as claimed in claim 29 or 30, **characterized in that** a plurality of recesses (19) are provided on the region (18), with which the second locking element (17) can enter into engagement as it slides along the region (18).

32. The occupant restraint device as claimed in claim 29 or either of claims 30 and 31, insofar as they refer back to claim 29, **characterized in that** the second locking element (17) is designed as a lever which can be pivoted to and fro between two positions and, in its first position, is not in engagement with the at least one recess (19) and which, in its second position, is in engagement with the at least one recess (19), and **in that** the lever (17) in the first position is prestressed in the direction of the second position.

33. The occupant restraint device as claimed in one of the preceding claims, **characterized in that** the receptacle (5) is designed such that it can be moved to and fro reversibly between the inoperative position and the operative position.

34. The occupant restraint device as claimed in one of the preceding claims, **characterized in that**, when a foreseen application of force to the outer side (2a) of the supporting structure (2) does not occur, the pre-crash detection device (7) provides a third output signal which brings about a shifting of the receptacle (5) from the operative position into the inoperative position.

35. The occupant restraint device as claimed in one of the preceding claims, **characterized in that** the supporting structure (2) comprises a selection of the following motor vehicle parts:
- a lateral body region,
- a lateral motor vehicle door, and
- a motor vehicle pillar.

36. The occupant restraint device as claimed in one of the preceding claims, **characterized in that** the motor vehicle seat (3) is designed as a driver's seat or a front passenger's seat of a motor vehicle.

## Revendications

1. Dispositif de retenue de passager pour un véhicule automobile, comprenant :
- une structure porteuse (2) d'un véhicule automobile qui, en se référant à une situation montée dans le véhicule automobile, présente un côté extérieur (2a) tourné vers un espace extérieur (A) du véhicule automobile et un côté intérieur (2b) tourné vers un espace intérieur (I) du véhicule automobile,
- un siège de véhicule (3) présentant un côté extérieur (3a) tourné vers le côté intérieur (2b) de la structure porteuse (2),
- un sac à gaz (4) qui est déployable pour protéger un passager vis-à-vis de l'effet d'une force provenant de l'espace extérieur (A) et agissant sur le côté extérieur (2a) de la structure porteuse (2),
- un logement de réception (5) pour le sac à gaz (4), agencé sur le côté extérieur (3a) du siège de véhicule (3), et
- une zone (6) susceptible d'être ouverte, dans le logement de réception (5), à travers laquelle le sac à gaz (4) est déployable vers l'espace intérieur (I) du véhicule automobile,
**caractérisé par**
un dispositif de détection avant collision (7) pour reconnaître l'imminence de l'action d'une force provenant de l'espace extérieur (A) et agissant sur le côté extérieur (2a) de la structure porteuse (2) et qui, lors de la reconnaissance de l'imminence de l'action d'une force, déclenche un déplacement du logement de réception (5) du sac à gaz (4) depuis une position de repos jusque dans une position de service le long d'une direction de déplacement (B) dirigée depuis le côté extérieur (3a) du siège de véhicule (3) vers le côté intérieur (2b) de la structure porteuse (2).

2. Dispositif de retenue de passager selon la revendication 1, **caractérisé en ce que** la zone susceptible d'être ouverte (6) est positionnée, du fait du déplacement du logement de réception (5) depuis la position de repos jusque dans la position de service, entre le côté intérieur (2b) de la structure porteuse (2) et le côté extérieur (3a) du siège de véhicule (3), de telle façon que le sac à gaz (4) peut se déployer transversalement à la direction de déplacement (B) entre le côté intérieur (2b) de la structure porteuse (2) et le côté extérieur (3a) du siège de véhicule (3).

3. Dispositif de retenue de passager selon la revendication 1 ou 2, **caractérisé en ce que** le sac à gaz (4), par référence à une situation montée dans un véhicule automobile, est conçu et prévu pour se déployer lors du gonflage le long de l'axe longitudinal du véhicule (x) dans la direction de circulation en marche avant.

4. Dispositif de retenue de passager selon l'une des revendications précédentes, **caractérisé en ce qu'**il est prévu un dispositif de génération de déplacement (8), qui coopère avec le dispositif de détection avant collision (7) et qui est conçu et prévu pour déplacer le logement de réception (5) depuis la position de repos jusque dans la position de service quand le dispositif de détection avant collision (7) reconnaît (détecte) l'imminence de l'action d'une force.

5. Dispositif de retenue de passager selon la revendication 4, **caractérisé en ce que** le dispositif de détection avant collision (7) est conçu et prévu, lors de la reconnaissance de l'imminence de l'action d'une force sur le côté extérieur (2a) de la structure porteuse (2), pour générer un premier signal de sortie qui provoque un déclenchement du dispositif de génération de déplacement (8) de telle sorte que le dispositif de génération de déplacement (8) déplace le logement de réception depuis la position de repos jusque dans la position de service.

6. Dispositif de retenue de passager selon l'une des revendications précédentes, **caractérisé par** un générateur de gaz (9) pour gonfler le sac à gaz (4), qui est conçu et prévu pour dégager un gaz afin de gonfler le sac à gaz (4) quand le logement de réception (5) se trouve dans sa position de service.

7. Dispositif de retenue de passager selon la revendication 6, **caractérisé en ce que** le dispositif de détection avant collision (7) est conçu et prévu pour générer, lors de la reconnaissance de l'imminence de l'action d'une force sur le côté extérieur (2a) de la structure porteuse (2), un second signal de sortie activant le générateur de gaz (9) pour gonfler le sac à gaz (4) quand le logement de réception (5) se trouve dans la position de service.

8. Dispositif de retenue de passager selon la revendication 6, **caractérisé par** un détecteur de collision qui coopère avec le générateur de gaz (9) et qui est conçu et prévu pour déclencher le générateur de gaz (9) afin de gonfler le sac à gaz (4) lors de la détection de l'action d'une force sur le côté extérieur (2a) de la structure porteuse (2) quand le logement de réception (5) se trouve dans sa position de service.

9. Dispositif de retenue de passager selon l'une des revendications précédentes, **caractérisé en ce que** le logement de réception (5) s'appuie, dans sa position de service, contre le côté intérieur (2b) de la structure porteuse (2) pour contrecarrer une déformation de la structure porteuse (2) à l'encontre de la direction de déplacement (B) sous l'action d'une force agissant sur le côté extérieur (2a) de la structure porteuse (2).

10. Dispositif de retenue de passager selon la revendication 4, ou selon l'une des revendications 5 à 9 prise en dépendance de la revendication 4, **caractérisé en ce que** le logement de réception (5), lors du déplacement à sa position de service par le dispositif de génération de déplacement (8), est poussé le long de la direction de déplacement (B) contre la structure porteuse (2) de sorte que le siège de véhicule (3) est déformé à l'encontre de la direction de déplacement (B) pour conserver un espace de déploiement pour le sac à gaz (4).

11. Dispositif de retenue de passager selon la revendication 4, ou selon l'une des revendications 5 à 9 prise en dépendance de la revendication 4, **caractérisé en ce que** le logement de réception (5) est déplacé par le dispositif de génération de déplacement (8) le long de la direction de déplacement (B) seulement jusqu'à un point tel que le logement de réception (5) vienne juste toucher le côté intérieur (2b) de la structure porteuse (2) dans la position de service.

12. Dispositif de retenue de passager selon l'une des revendications 1 à 10, **caractérisé en ce que** le siège de véhicule (3) est conçu et prévu pour être monté dans un véhicule automobile en translation linéaire le long de la direction de déplacement (B).

13. Dispositif de retenue de passager selon la revendication 12, **caractérisé en ce que** le logement de réception (5), lors du déplacement vers la position de service par le dispositif de génération de mouvement (8), est poussé contre le côté intérieur (2b) de la structure porteuse (2) pour déplacer le siège de véhicule en éloignement de la structure porteuse en sens contraire à la direction de déplacement (B).

14. Dispositif de retenue de passager selon l'une des revendications précédentes, **caractérisé en ce que** la zone susceptible d'être ouverte (6) du logement de réception (5) présente une zone affaiblie le long de laquelle la zone susceptible d'être ouverte (6) se déchire quand le sac à gaz pousse contre la zone susceptible d'être ouverte lors de son gonflage.

15. Dispositif de retenue de passager selon l'une des revendications précédentes, **caractérisé en ce que** le logement de réception (5) est réalisé au moins partiellement sous forme de boîtier rigide.

16. Dispositif de retenue de passager selon la revendication 6 ou selon l'une des revendications 7 à 15 prise en dépendance de la revendication 6, **caractérisé en ce que** le logement de réception (5) entoure le sac à gaz et le générateur de gaz.

17. Dispositif de retenue de passager selon l'une des revendications précédentes, **caractérisé en ce que** le logement de réception (5) est monté sur le siège de véhicule, pour son déplacement depuis la position de repos jusque dans la position de service, en translation linéaire le long de la direction de déplacement (B).

18. Dispositif de retenue de passager selon l'une des revendications précédentes, **caractérisé en ce que** le siège de véhicule comprend un dossier de siège (10) qui forme une surface d'appui (11) pour le dos d'un passager (P) qui occupe le siège de véhicule (3).

19. Dispositif de retenue de passager selon la revendication 18, **caractérisé en ce que** le logement de réception (5) est monté dans le dossier de siège (10), pour son déplacement depuis la position de repos jusque dans la position de service, en translation linéaire le long de la direction de déplacement (B), de sorte que le logement de réception (5) est recouvert dans la position de repos par une enveloppe tout à fait extérieure du dossier de siège (10).

20. Dispositif de retenue de passager selon l'une des revendications 18 ou 19, **caractérisé en ce que** le dossier de siège (10) présente une aile de dossier (12) qui dépasse, transversalement à la direction de déplacement (B), au-delà de la surface d'appui (11) du dossier (10) de siège et qui est agencée, le long de la direction de déplacement (B) entre un passager (P) occupant le siège de véhicule (3) et la structure porteuse (2) et qui est conçue et prévue pour soutenir une partie corporelle (P'), tournée vers la structure porteuse (2), du passager (P) occupant le siège de véhicule (3).

21. Dispositif de retenue de passager selon la revendication 20, sauf prise en dépendance de la revendication 11, **caractérisé en ce que** le logement de réception (5) est monté dans le dossier de siège (10), pour son déplacement depuis la position de repos jusque dans la position de service, en translation linéaire le long de la direction de déplacement (B) de telle façon qu'il pousse l'aile de dossier (12) à l'encontre de la direction de déplacement (B) contre une partie corporelle (P'), tournée vers la structure porteuse (2), d'un passager (P) occupant le siège de véhicule (3) quand le logement de réception (5) pousse contre le côté intérieur (2b) de la structure porteuse (2) lors du déplacement jusque dans sa position de service le long de la direction de déplacement (B).

22. Dispositif de retenue de passager selon l'une des revendications précédentes, **caractérisé en ce que** le dispositif de génération de mouvement (8) destiné à générer le mouvement du logement de réception (5) depuis la position de repos jusque dans la position de service comprend un ressort précontraint (13), dont le mouvement de détente produit le mouvement du logement de réception (5).

23. Dispositif de retenue de passager selon la revendication 18 ou selon l'une des revendications 19 à 22 prise en dépendance de la revendication 18, **caractérisé en ce que** le siège de véhicule (3) comprend un cadre de dossier (14) à titre de corps de base du dossier de siège (10).

24. Dispositif de retenue de passager selon la revendication 23, **caractérisé en ce que** le logement de réception (5) est monté sur le cadre de dossier (14), pour son déplacement depuis la position de repos jusque dans la position de service, en translation linéaire le long de la direction de mouvement (B).

25. Dispositif de retenue de passager selon la revendication 22 et la revendication 23 ou 24, **caractérisé en ce que** le ressort, dans la position de repos du logement de réception (5), précontraint le logement de réception (5) contre le cadre de dossier (14), de telle façon que le logement de réception (5) est déplacé jusque dans sa position de service lors d'un mouvement de détente du ressort (13) le long de la direction de mouvement (B).

26. Dispositif de retenue de passager selon la revendication 22 ou selon l'une des revendications 23 à 25 prise en dépendance de la revendication 22, **caractérisé en ce qu'**il est prévu un premier élément de verrouillage (22), réalisé déplaçable en va-et-vient entre deux positions, ledit premier élément de verrouillage (15) empêchant dans la première position un mouvement de détente du ressort (13) et libérant le ressort (13) par un déplacement jusque dans la seconde position, de sorte que le logement de réception (5) est déplacé au moyen du ressort (13) hors de la position de repos jusque dans la position de service.

27. Dispositif de retenue de passager selon la revendication 26, **caractérisé en ce que** le premier élément de verrouillage (15) est monté sur le logement de réception (5) en pivotement en va-et-vient entre la première et la seconde position.

28. Dispositif de retenue de passager selon la revendication 22 et selon l'une des revendications 26 ou 27, **caractérisé en ce qu'**il est prévu un autre dispositif de génération de mouvement (16) coopérant avec le dispositif de détection avant collision (8) qui, pour libérer le ressort (13), provoque un pivotement du premier élément de verrouillage (15) hors de la première position jusque dans la seconde position, quand le dispositif de détection avant collision (7) reconnaît l'imminence de l'action d'une force sur le côté extérieur (2a) de la structure porteuse (2).

29. Dispositif de retenue de passager selon la revendication 23, ou selon l'une des revendications 24 à 28 prises en dépendance de la revendication 23, **caractérisé en ce qu'**il est prévu un second élément de verrouillage (17) qui est réalisé pour coulisser, lors du déplacement du logement de réception (5) entre la position de repos et la position de service, contre une zone (18) du cadre de dossier (14), le second élément de verrouillage (17) étant précontraint contre ladite zone (18), de sorte que le second élément de verrouillage (17) peut venir en engagement avec au moins un évidement (19) ménagé dans la zone (18) lors de son coulissement le long de la zone (18).

30. Dispositif de retenue de passager selon la revendication 29, **caractérisé en ce que** l'évidement (19) forme un contre-appui pour le logement de réception (5), qui encaisse les forces agissant sur le logement de réception (5) à l'encontre de la direction de déplacement (B), de sorte que le logement de réception (5) ne peut pas être déplacé à l'encontre de la direction de déplacement (B) quand le second élément de verrouillage (17) est en engagement avec le dit au moins un évidement (19).

31. Dispositif de retenue de passager selon la revendication 29 ou 30, **caractérisé en ce qu'**il est prévu une pluralité d'évidements (19) dans la zone (18), avec lesquels le second élément de verrouillage (17) peut venir en engagement lors de son coulissement le long de la zone (18).

32. Dispositif de retenue de passager selon la revendication 29 ou l'une des revendications 30 ou 31 prise en dépendance de la revendication 29, **caractérisé en ce que** le second élément de verrouillage (17) est réalisé sous forme d'un levier capable de pivoter en va-et-vient entre deux positions qui, dans sa première position, se trouve hors d'un engagement avec ledit au moins un évidement (19) et qui, dans sa seconde position, se trouve en engagement avec ledit au moins un évidement (19), et **en ce que** le levier (17) qui se trouve dans la première position est précontraint en direction de la seconde position.

33. Dispositif de retenue de passager selon l'une des revendications précédentes, **caractérisé en ce que** le logement de réception (5) est réalisé mobile en va-et-vient de façon réversible entre la position de repos et la position de service.

34. Dispositif de retenue de passager selon l'une des revendications précédentes, **caractérisé en ce que** le dispositif de détection avant collision (7) envoie un troisième signal de sortie en l'absence de l'action d'une force prédite sur le côté extérieur (2a) de la structure porteuse (2), signal qui provoque un déplacement du logement de réception (5) depuis la position de service vers la position de repos.

35. Dispositif de retenue de passager selon l'une des revendications précédentes, **caractérisé en ce que** la structure porteuse (2) inclut une sélection des parties suivantes du véhicule :
- une zone latérale de carrosserie,
- une porte latérale du véhicule, et
- un pilier du véhicule.

36. Dispositif de retenue de passager selon l'une des revendications précédentes, **caractérisé en ce que** le siège de véhicule (3) est réalisé comme un siège de conducteur ou un siège de passager d'un véhicule automobile.
